# EUROPEAN PATENT APPLICATION

(11) **EP 4 142 117 A1**
(43) Date of publication of application: **01.03.2023**
(21) Application number: 22188981.9
(22) Date of filing: 05.08.2022
(51) Int. Cl.: H02K 5/04, H02K 7/116, H02K 11/33, H02K 23/66, B25J 1/00, F16H 1/00

(54) **SERVO AND ROBOT**

(30) Priority: 30.08.2021 CN 202122059225 U
(71) Applicant: Robosen Robotics (Shenzhen) Co., Ltd, Nanshan Dist., Shenzhen, Guangdong 518000 (CN)
(72) Inventor: ZHENG, Liming, BEIJING, 100085 (CN); CHEN, Xiaosen, BEIJING, 100085 (CN)
(74) Representative: Müller Hoffmann & Partner

(57) **Abstract**

Provided are a servo and a robot. The servo comprises an upper cover (1), a middle cover (2), a lower cover (3), a direct-current motor (21), and a set of gears meshing with each other. The servo comprises a body, and a cylindrical structure having a cylindrical cavity. The servo is in the shape of a hinge as a whole. The direct-current motor (21) is flat, and a side surface of a body of the direct-current motor is exposed outside the middle cover (2).

## Description

### TECHNICAL FIELD

The present disclosure relates to the technical field of robot accessories, and particularly to a servo and a robot having the servo.

### BACKGROUND

A servo is mainly composed of a circuit board, a motor, a reduction gear set, a sensor and a control circuit. The operating principle of the servo is that an integrated circuit (IC) on the circuit board of the servo performs operations as follows based on a control signal sent by a main control board of a robot: determining a direction of rotation and driving a coreless motor to start rotating so as to transmit power to a swinging arm via the reduction gear set while determining whether the swinging arm has reached a predetermined position according to a detection signal sent back by a position detection sensor. The servo is a power source for a remote control model or a humanoid robot to control actions, and is also an important motion execution device that drives the motion of a joint of the robot.

For example, the Chinese utility model patent with the publication number CN 207616609 U discloses a servo and a robot. The servo comprises a housing, a reduction mechanism, a motor, a control board, a control wire and a potentiometer, wherein the reduction mechanism comprises an output bearing, an output gear set and a variable speed gear set; one end of the output bearing is connected to a potentiometer shaft, and the other end of the output bearing is connected to an output gear set shaft; the variable speed gear set is connected to a motor shaft, and the output gear set meshes with the variable speed gear set; the potentiometer is electrically connected to the control board via the control wire, and the motor is electrically connected to the control board. However, the servo occupies a large space in the robot.

### SUMMARY

According to an aspect of embodiments of the present disclosure, provided is a servo, comprising an upper cover, a middle cover, a lower cover, a direct-current motor, and a set of gears meshing with each other. The servo comprises a body, and a cylindrical structure having a cylindrical cavity. The servo is in the shape of a hinge as a whole. The direct-current motor is flat, and a side surface of a body of the direct-current motor is exposed outside the middle cover.

According to another aspect of the embodiments of the present disclosure, provided is a robot, comprising the servo described above.

According to the embodiments of the present disclosure, it is possible to provide a space-saving and small-size servo, to solve the problem that an internal space of the robot is too small to enable the operation of the servo.

### BRIEF DESCRIPTION OF THE DRAWINGS

The above and other features and advantages of the embodiments of the present disclosure will be more apparent to those of ordinary skill in the art from the following detailed description of the embodiments of the present disclosure with reference to the accompanying drawings, in which:
Fig. 1 is a schematic structural diagram of a servo according to some embodiments of the present disclosure.
Fig. 2 is an exploded schematic diagram of a servo according to some embodiments of the present disclosure.
Fig. 3 is a schematic structural diagram of a set of gears in a servo according to some embodiments of the present disclosure.
Fig. 4 is a schematic structural diagram of a motor and a printed circuit board in a servo according to some embodiments of the present disclosure.
Fig. 5 is a schematic structural diagram of a printed circuit board and a potentiometer in a servo according to some other embodiments of the present disclosure.
Fig. 6 is a schematic structural diagram of a servo according to still some other embodiments of the present disclosure.
Fig. 7 is an exploded schematic diagram of a servo according to yet some other embodiments of the present disclosure.

List of reference numerals:
1 upper cover, 2 middle cover, 3 lower cover, 8 body, 9 cylindrical structure, 91 cylindrical cavity, 4 screw, 11 round hole, 12 upper housing, 13 lower housing, 14 lug, 15 connecting hole, 16 groove, 17 snap block, 21 direct-current motor, 22 first-stage gear, 23 second-stage gear, 24 third-stage gear, 25 fourth-stage gear, 26 fifth-stage gear, 27 output gear, 271 output gear shaft, 28 PCB, 29 potentiometer, 30 idle gear, 31 motor gear, 32 servo plate toothed connector, 33 copper alloy sleeve, 34 wire slot, 35 chip, 36 fifth-stage gear shaft, 37 soldering structure, 211 transverse limiting strip, 212 longitudinal limiting strip, 213 motor shaft hole, 215 motor electrodes, 214 first cavity, 216 second cavity, 217 bottom wall of the second cavity, 219 side wall of the direct-current motor, 281 notch, 282 through hole, and 291 rotation hole.

### DETAILED DESCRIPTION OF EMBODIMENTS

For a clearer understanding of the technical features, objectives and effects of the present disclosure, specific embodiments of the present disclosure will now be described with reference to the accompanying drawings. The same reference numerals refer to the same or similar elements throughout the figures. For the sake of brevity of the drawings, only the parts relevant to the present disclosure are exemplarily shown in the figures, and they do not represent the actual structure as a product.

The word "exemplary" represents "serving as an instance, example or description" herein, and any illustration and implementation described as "exemplary" herein should not be interpreted as a more preferred or more advantageous technical solution.

It should be noted that directional indications (such as top, bottom, up, down, left, right, front, and back) in the embodiments of the present disclosure are only used to explain the relative positional relationship and movement between components in a specific posture (e.g., a posture as shown in the figures), and when the specific posture changes, the directional indications also change accordingly.

In the present disclosure, unless otherwise expressly specified and defined, the terms such as "connection" and "fixing" should be interpreted broadly. For example, "fixing" may be a fixed or detachable connection, or integration; may be a mechanical connection, or an electrical connection; may be a direct connection or an indirect connection by means of an intermediate medium, and may be communication between the interiors of two elements or the interaction relationship of the two elements, unless otherwise expressly defined.

In the present disclosure, unless otherwise stated, the use of terms "first", "second", etc., to describe various elements is not intended to limit the positional relationship, temporal relationship or importance relationship of these elements, and such terms are only used to distinguish one element from another. In some examples, the first element and the second element may refer to the same instance of the element, and in some cases, based on contextual descriptions, the first element and the second element may also refer to different instances.

The following description is merely exemplary in nature and is not intended to limit the present disclosure, application, or uses. The specific embodiments of a servo of the present disclosure will be further described below with reference to the accompanying drawings of the specification.

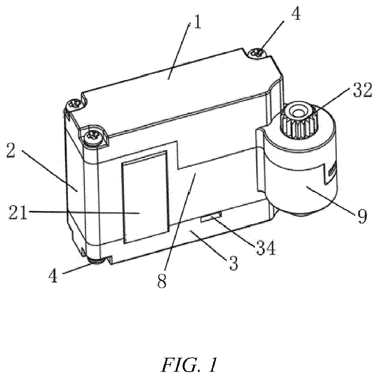

Fig. 1 shows a schematic structural diagram of a servo according to some embodiments of the present disclosure.

In some embodiments, the servo comprises an upper cover 1, a middle cover 2, a lower cover 3, a direct-current motor 21, and a set of gears meshing with each other. The servo is in the shape of a hinge as a whole, and the servo comprises a body 8 and a cylindrical structure 9 having a cylindrical cavity 91. For example, as shown in Fig. 1, the body 8 of the servo is substantially box-shaped, and the cylindrical structure 9 is arranged at one corner of the box-shaped body, so that the servo is in the shape of a hinge as a whole. The direct-current motor 21 is flat, and a side surface of a body of the direct-current motor is exposed outside the middle cover 2. Under the condition that a torque of the servo is large enough, in such a way, the motor of the servo is thinnest, the overall servo is narrower, and the shape of the servo is more novel and compact.

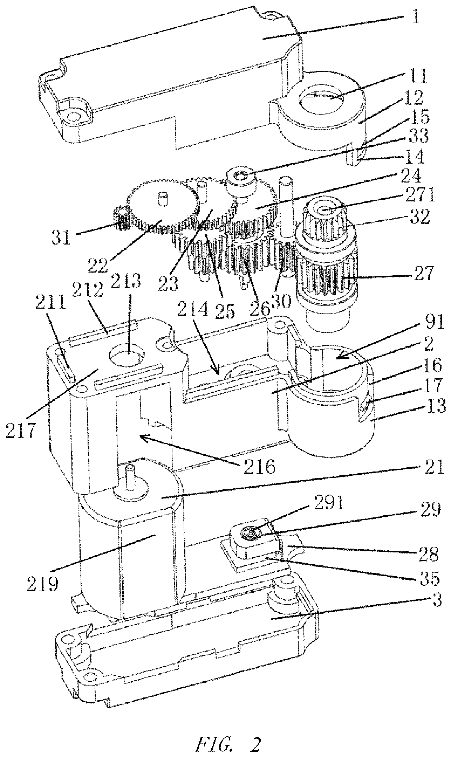

Fig. 2 shows an exploded schematic diagram of a servo according to some embodiments of the present disclosure. As shown in Fig. 2, the set of gears is located between the upper cover 1 and the middle cover 2 and is received in a space between the upper cover 1 and the middle cover 2. The set of gears comprises a first-stage gear 22, a second-stage gear 23, a third-stage gear 24, a fourth-stage gear 25, a fifth-stage gear 26, an idle gear 30, and a motor gear 31 which are located in the middle cover 2, and an output gear 27 located in the cylindrical cavity 91. A copper alloy sleeve 33 is provided on a gear shaft of the third-stage gear 24. The copper alloy sleeve, for example, may abut against an inner wall of the upper cover 1 in the servo, so as to provide some support to the gear. A side wall of the middle cover 2 forms a first cavity 214 and a second cavity 216 which are spaced apart from each other. The first cavity 214 is open upward for receiving part of the set of gears. For example, the second-stage gear 23, the third-stage gear 24, the fourth-stage gear 25, the fifth-stage gear 26, the idle gear 30 and the output gear 27 of the set of gears are arranged in the first cavity 214, the output gear 27 is particularly arranged in a cylindrical portion of the first cavity 214, and the motor gear 31 and the first-stage gear 22 may be located above a bottom wall 217 of the second cavity 216. The second cavity 216 is open downward for receiving the direct-current motor 21. The side wall that forms the second cavity 216 is provided with at least one recess, so that at least one side surface 219 of the body of the direct-current motor 21 is exposed outside the middle cover 2.

In some embodiments, the output gear 27 is fixed to a gear shaft, and the gear shaft 271 passes through the upper cover 1 and the middle cover 2, so that each of upper and lower ends of the gear shaft of the output gear 27 may be connected to a servo plate, making an output torque more balanced. In order to connect the servo plate, an end portion of the gear shaft of the output gear 27 may be provided with a servo plate toothed connector. For example, as shown in Fig. 2, the top of the output gear 27 is provided with a servo plate toothed connector 32.

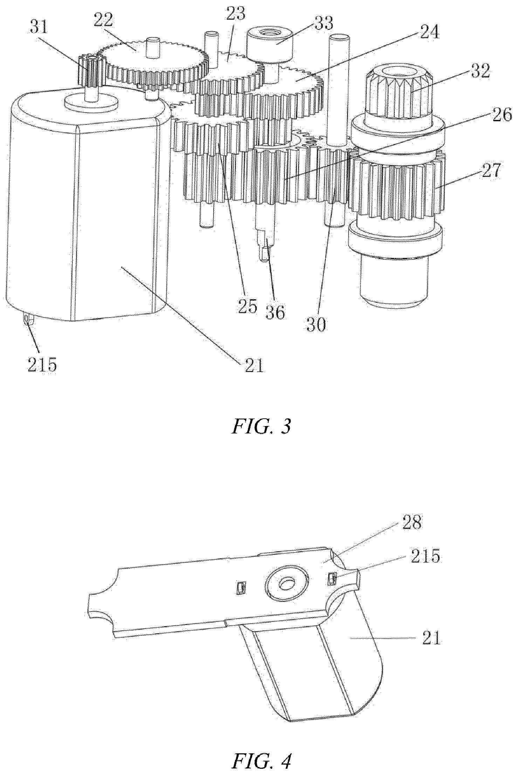

Fig. 3 shows a schematic structural diagram of a gear set in a servo according to some embodiments of the present disclosure. Exemplarily, the working process of the set of gears is described as below with reference to Fig. 3: the motor gear 31 movably meshes with the first-stage gear 22; a first-stage pinion is also mounted on a rotating shaft of the first-stage gear 22, and the first-stage pinion is located at the bottom of the first-stage gear 22 and is coaxially connected to the first-stage gear 22; the first-stage pinion movably meshes with the second-stage gear 23, a second-stage pinion is sleeved on a rotating shaft of the second-stage gear 23, and the second-stage pinion is located at the bottom of the second-stage gear 23 and is coaxially fixedly connected to the second-stage gear 23; the second-stage pinion movably meshes with the third-stage gear 24, a third-stage pinion is also sleeved on a rotating shaft of the third-stage gear 24, and the third-stage pinion is located at the bottom of the third-stage gear 24 and is coaxially connected to the third-stage gear 24; the third-stage pinion movably meshes with the fourth-stage gear 25, a fourth-stage pinion is sleeved on a rotating shaft of the fourth-stage gear 25, and the fourth-stage pinion is located at the bottom of the fourth-stage gear 25 and is coaxially fixedly connected to the fourth-stage gear 25; the fourth-stage pinion movably meshes with the fifth-stage gear 26; and the fifth-stage gear 26 meshes with the idle gear 30, and the idle gear 30 movably meshes with the output gear 27.

In some embodiments, as shown in Fig. 1, an output end of the gear shaft 271 of the output gear 27 may pass through the upper cover 1 and be exposed outside the upper cover 1. For example, as shown in Fig. 2, the upper cover 1 is provided with a round hole 11, and the output end of the gear shaft 271 of the output gear 27 may pass through the round hole 11 and be exposed outside the upper cover 1.

In some embodiments, for example, in the embodiment shown in Fig. 2, the servo comprises a servo printed circuit board (PCB) 28 and a potentiometer 29. The PCB 28 and the potentiometer 29 are arranged in the lower cover 3. A chip is arranged between the potentiometer 29 and the servo PCB 28, thereby saving more space.

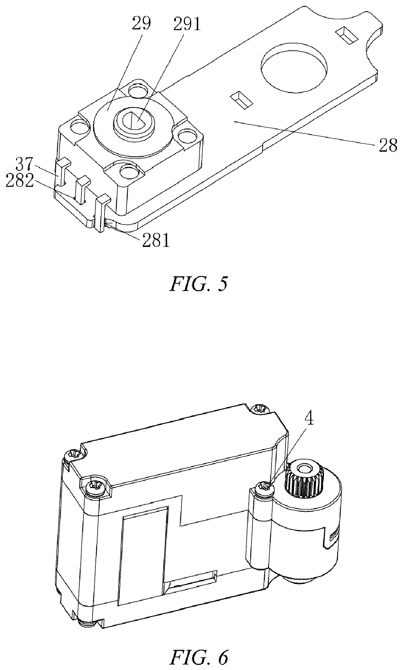

In some embodiments, the potentiometer 29 is fixed to the servo PCB 28 via a soldering structure 37. The servo PCB 28 is provided with at least one notch 281 on one side, a first end of the soldering structure 37 is fixed to the potentiometer 29, and a second end of the soldering structure is soldered to an inner wall of the notch 281. Exemplarily, Fig. 5 shows a schematic structural diagram of the potentiometer assembled in the servo as shown in Figs. 1 to 2 or Figs. 6 to 7, according to some embodiments of the present disclosure. As shown in Fig. 5, the PCB 28 is provided with two notches 281 on one side and a complete through hole 282 penetrating the PCB. The soldering structure 37 comprises three finger-shaped components, and one end of each of the finger-shaped components is fixed (e.g., soldered) to the potentiometer 29, and the other end is soldered to the corresponding notch 281 or an inner wall of the through hole 282. The notches 281 are used as soldering portions, thereby saving more space.

In some embodiments, a motor shaft hole 213 is formed in the top of the middle cover 2, and the top of the direct-current motor 21, for example, a motor shaft of the direct-current motor, passes through the motor shaft hole 213, so as to be engaged with the motor gear 31 located above the bottom wall 217 of the second cavity 216, for example. The bottom of the direct-current motor 21 is fixed to the servo PCB 28 via electrodes 215 of the motor (as shown in Fig. 4), thereby saving more space.

In some embodiments, a rotation hole 291 is formed in the middle of the potentiometer 29. For one of the set of gears, for example, the fifth-stage gear 26, the bottom of a fifth-stage gear shaft 36 is matched with the rotation hole of the potentiometer 29, and the fifth-stage gear 26 is fixedly connected to the fifth-stage gear shaft 36 in an interference fit. When rotating, the fifth-stage gear shaft 36 will drive accessories on the rotation hole in the potentiometer 29 to rotate. The potentiometer 29 may determine an angle of output teeth of the servo by measuring an angular position of the gear shaft of the fifth-stage gear 26.

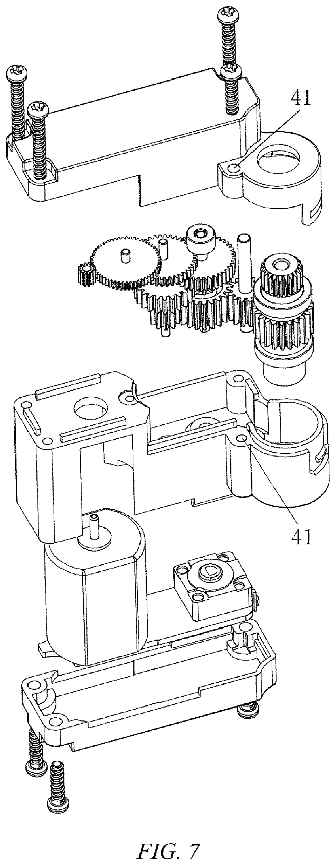

In some embodiments, the upper cover 1, the middle cover 2 and the lower cover 3 are all provided with threaded holes, and are connected to one another via screws. For example, in the embodiment as shown in Fig. 1, the upper cover 1, the middle cover 2 and the lower cover 3 are connected using three upper screws 4 and three lower screws 4 that pass through the threaded holes. For another example, in the embodiment shown in Figs. 6 and 7, the upper cover 1 and the middle cover 2 are respectively provided with a threaded hole 41 at the cylindrical structure, and a screw 4 passes through the threaded holes 41 to connect the upper cover 1 and the middle cover 2. In Figs. 6 and 7, for the sake of brevity, the same or similar elements as those in Figs. 1 and 2 are not marked with reference numerals.

In some embodiments, for example, in the embodiment shown in Fig. 2, a cylindrical upper housing 12 is provided at an end portion of the upper cover 1, a cylindrical lower housing 13 is provided at an end portion of the middle cover 12, and the upper housing 12 and the lower housing 13 form the cylindrical structure 9 and are connected to each other by at least one of screw connection and snap-fit connection.

For example, for realizing the snap-fit connection, the upper housing 12 and the lower housing 13 are provided with snap holes or snap blocks which are matched with each other. As shown in Fig. 2, the upper housing 12 is provided with a lug 14, and the lug 14 is provided with a connecting hole 15. A groove 16 is formed on an outer peripheral surface of the lower housing 13, and the groove is provided with a snap block 17. The snap block 17 on the middle cover 2 is matched with the connecting hole 15 on the upper cover 1, so that the output gear 27 is fixed in the upper cover 1 and the middle cover 2. Of course, the upper housing 12 may also be provided with a snap block, and the lower housing 13 may be provided with a lug having a connecting hole.

For example, for realizing the screw connection, the upper housing 12 is provided with upper threaded holes, the lower housing 13 is provided with lower threaded holes corresponding to the upper threaded holes, and the upper housing 12 and the lower housing 13 are connected via screws that pass through the upper threaded holes and the lower threaded holes.

In some embodiments, the top of the middle cover 2 is provided with a transverse limiting strip 211 and a longitudinal limiting strip 212, so that the middle cover 2 and the upper cover 1 are matched with each other.

Exemplarily, during assembling of the servo shown in Fig. 1, corresponding snap grooves of the upper cover 1, the middle cover 2 and the lower cover 3 may be snap-fitted together first, then three screws 4 are respectively inserted into the upper cover 1 to connect the upper cover 1 and the middle cover 2, and finally another three screws 4 are inserted into the lower cover 3 to connect the lower cover 3 and the middle cover 2. During assembling of the servo shown in Fig. 6, corresponding snap grooves of the upper cover 1, the middle cover 2 and the lower cover 3 may be snap-fitted together first, then one screw 4 is inserted into the threaded hole 41 of the upper housing to connect the upper housing and the lower housing, next, three screws 4 are respectively inserted into the other three threaded holes of the upper cover 1 to connect the upper cover 1 and the middle cover 2, and finally another three screws 4 are inserted into the lower cover 3 to connect the lower cover 3 and the middle cover 2. It will be understood by those skilled in the art that the sequence of steps of the assembling is not limited, and the assembling may be carried out in another sequence different from the sequence described above.

In some embodiments, the lower cover 3 is provided with wire slots 34, which comprise, for example, an inlet slot and an outlet slot, facilitating the mounting of lead wires. The wire slots 34 are aligned with terminals on the servo PCB 28, for example.

Exemplarily, a wiring method of the servo may be as follows: first, the potentiometer 29 is fixed to the servo PCB 28 with the rotation hole 291 in the potentiometer 29 being matched with a gear shaft of one of the set of gears, for example, the fifth-stage gear shaft 36 of the fifth-stage gear 26, and then the circuit board is covered. Next, the lower cover 3 and the middle cover 2 are combined together. The servo PCB 28 has two terminals, which are aligned with the wire slots 34 on the lower cover 3. During operation, it is only necessary to insert a lead wire into the terminal from the wire inlet slot of the wire slots 34 and then lead it out from the wire outlet slot of the wire slots 34. For the servo using the above wiring method, the lead wire is sealed by the servo PCB 28 and the lower cover 3 respectively, and its end is buried in the outlet slot. In this way, the exposure of the lead wire is avoided, the mounting and replacement of the wire are facilitated, and the wire can be completely hidden from the appearance. Moreover, wire fatigue can be greatly reduced, the service life of the wire can be improved, and the performance and stability of the servo can be improved while the appearance of the servo is improved.

According to another aspect of the present disclosure, provided is a robot, comprising the servo according to any one of the foregoing embodiments.

It is not difficult for those skilled in the art to understand that the servo and the robot in the embodiments of the present disclosure include any combination of various parts in this specification. These combinations are not described in detail herein for the sake of conciseness of the specification. However, after reading this specification, the scope of the present disclosure, which is constituted by any combination of the parts in this specification, has been obvious.

## Claims

1. A servo, comprising an upper cover (1), a middle cover (2), a lower cover (3), a direct-current motor (21), and a set of gears meshing with each other, wherein the servo comprises a body and a cylindrical structure having a cylindrical cavity, the servo is in the shape of a hinge as a whole, the direct-current motor (21) is flat, and a side surface of a body of the direct-current motor is exposed outside the middle cover (2).

2. The servo according to claim 1, wherein the set of gears comprises a first-stage gear (22), a second-stage gear (23), a third-stage gear (24), a fourth-stage gear (25), a fifth-stage gear (26), an idle gear (30), a motor gear (31) which are located in a space between the upper cover (1) and the middle cover (2), and an output gear (27) located in the cylindrical cavity, wherein a copper ally sleeve (33) is provided on a gear shaft of the third-stage gear (24).

3. The servo according to claim 2, wherein the output gear (27) is fixed to a gear shaft which passes through the upper cover (1) and the middle cover (2), and the top of the output gear (27) that passes through the upper cover (1) is provided with a servo plate toothed connector (32).

4. The servo according to any one of claims 1 to 3, wherein a servo printed circuit board (PCB) (28) and a potentiometer (29) are provided in the lower cover (3), the potentiometer (29) is located on the servo PCB (28), and a chip is provided between the potentiometer (29) and the servo PCB (28).

5. The servo according to claim 4, wherein the potentiometer (29) is soldered to the servo PCB (28) via a soldering structure (37), the servo PCB (28) is provided with at least one notch on one side, a first end of the soldering structure (37) is fixed to the potentiometer (29), and a second end of the soldering structure is soldered to an inner wall of the notch.

6. The servo according to any one of claims 1 to 5, wherein the top of the middle cover (2) is provided with a motor shaft hole (213), a first end of the direct-current motor (21) passes through the motor shaft hole (213), and a second end of the direct-current motor (21) is fixed to the servo PCB (28) via motor electrodes (215).

7. The servo according to any one of claims 1 to 5, wherein the lower cover (3) is provided with wire slots (34) comprising an inlet slot and an outlet slot.

8. The servo according to claim 2, wherein the servo comprises a potentiometer (29), a rotation hole is formed in the middle of the potentiometer (29), one end of a fifth-stage gear shaft (36) of the fifth-stage gear (26) is matched with the rotation hole of the potentiometer (29), and the fifth-stage gear (26) is fixedly connected to the fifth-stage gear shaft (36) in an interference fit.

9. The servo according to any one of claims 1 to 8, wherein each of the upper cover (1), the middle cover (2) and the lower cover (3) is provided with threaded holes, and the upper cover (1), the middle cover (2) and the lower cover (3) are connected via screws that pass through the threaded holes.

10. The servo according to any one of claims 1 to 9, wherein a cylindrical upper housing (12) is provided at an end portion of the upper cover (1), a cylindrical lower housing (13) is provided at an end portion of the middle cover (12), and the upper housing (12) and the lower housing (13) form the cylindrical structure and are connected to each other by at least one of screw connection and snap-fit connection.

11. The servo according to claim 10, wherein the upper housing (13) is provided with a lug (14), and the lug (14) is provided with a connecting hole (15), a groove (16) is formed on an outer peripheral surface of the lower housing (13), the groove is provided with a snap block (17), and the snap block (17) is configured to be snap-fitted with the connecting hole (15) on the upper housing (13).

12. The servo according to any one of claims 10 or 11, wherein the upper housing (12) is provided with upper threaded holes, the lower housing (13) is provided with lower threaded holes corresponding to the upper threaded holes, and the upper housing (12) and the lower housing (13) are connected via screws that pass through the upper threaded holes and the lower threaded holes.

13. The servo according to any one of claims 1 to 12, wherein the top of the middle cover (2) is provided with a transverse limiting strip (211) and a longitudinal limiting strip (212).

14. The servo according to any one of claims 1 to 13, wherein the servo PCB (28) is provided with terminals, the lower cover (3) comprises wire slots (34), and the wire slots (34) are aligned with the terminals on the servo PCB (28).

15. A robot, comprising a servo according to any one of claims 1 to 14.
